Europäisches Patentamt

European Patent Office

Office européen des brevets

(11) Publication number: **0 391 597**
**A2**

## (12) EUROPEAN PATENT APPLICATION

(21) Application number: **90303317.3**

(22) Date of filing: **28.03.90**

(51) Int. Cl.⁵: **H04Q 7/04, H04B 7/26, H04B 10/12**

(30) Priority: **04.04.89 US 333490**

(43) Date of publication of application:
**10.10.90 Bulletin 90/41**

(84) Designated Contracting States:
**DE ES FR GB IT NL SE**

(71) Applicant: **AMERICAN TELEPHONE AND TELEGRAPH COMPANY**
**550 Madison Avenue**
**New York, NY 10022(US)**

(72) Inventor: **Chu, Ta-Shing**
**112 Jumping Brook Road**
**Lincroft, New Jersey 07738(US)**
Inventor: **Gans, Michael J.**
**39 River Avenue**
**Monr    ith Beach, New Jersey 07750(US)**

(74) Representative: **Buckley, Christopher Simon Thirsk et al**
**AT&T (UK) LTD. AT&T Intellectual Property Division 5 Mornington Road**
**Woodford Green, Essex IG8 OTU(GB)**

(54) **Optical fiber microcellular mobile radio.**

(57) A microcellular communication system includes optical fiber connections (26) between a base station (25) and opto-RF transducers (22) located in a closely spaced grid. Radio-band signals are modulated directly onto laser outputs through the optical fibers for both transmission to mobile units or from the mobile units. The opto-RF transducers, housed in canisters, are mounted on telephone or power poles to provide radio link coverage to mobile and portable phones located in a microcell area, e.g., in a congested metropolitan area where space for a roof-top base station is very limited and expensive.

*FIG. 1*

## OPTICAL FIBER MICROCELLULAR MOBILE RADIO

This invention relates to a mobile radio system having a plurality of cells which reuse transmitting carrier frequencies.

### Background of the Invention

There is an ever increasing demand for more capacity in cellular mobile radio. In the current 900 MHz, UHF cellular systems, only 20 MHz are available for each direction of transmission between a base station and mobile units. By separating the overall 20 MHz band into a number N of sub-bands and assigning each sub-band to a different set of geographical cells in a regular array of cells which cover a large region, the frequencies are reused. Co-channel interference is minimized by assuring that the ratio of cell radius to the distance to the next cell which uses the same frequency sub-band is small. In the regular pattern of cells, this ratio is made smaller by increasing the number N and is independent of the absolute cell size used in the pattern. Typically, the number N = 21, which assures negligible co-channel interference and allows 16 channels per sub-band. By making the scale of the pattern smaller, more users per square mile are accommodated with the same overall bandwidth.

Previously, cellular radio system operators have increased capacity by subdividing the cell area and reusing assigned frequencies in closer geographic areas. Whereas a typical cell radius is eight miles, subdivisions down to a cell radius of one mile or smaller are often needed. In such small cell areas, appropriate choices of base station locations become very restricted because public facilities may not be available where needed, and private locations are likely to be prohibitively expensive. For many small cells, a residential location may be the only available choice. People in residential areas often object to the base station antenna tower because its height, typically 100 to 150 feet, makes it an eyesore; and its radiated power, typically 400 to 1,200 watts, is perceived to be an environmental health hazard.

Another problem arises when one considers the use of not yet allocated bandwidth in the 10 to 60 GHz, or millimeter wave, frequency spectrum for providing very large capacity mobile communication service. Propagation loss and Doppler frequency shifts are more severe for millimeter waves than for the currently used UHF signals. The increased Doppler shift requires each channel to use more bandwidth than at the channels in UHF systems. To fully utilize the bandwidth in the 10 to 60 GHz frequency range, with time division multiplexing for example, it is necessary to minimize the the spread in time delays. To reduce propagation loss and the spread in time delays, any millimeter wave mobile radio system design must strongly favor line of sight operation.

The above problems of mobile radio need base station antennas to be placed geographically very close to the mobile units, but the conventional means of carrying the signals between the base station and remote antennas by means of coaxial RF transmission lines is prohibitively expensive because of their large transmission losses.

### Summary of the Invention

The above problems are solved in accordance with the present invention by placing many antennas, associated with a single base station, at grid points near the mobile units and using an optical fiber network for interconnecting the antennas with the base station. Optical wavelength carriers are analog modulated with multiplexed RF mobile radio channels for transmission through the optical fiber network. The modulated optical wavelength carriers are analog detected from the optical fibers so that the RF channels are distributed to the grid of antennas without distortion. Received RF channels also are collected from the grid of antennas for modulating laser outputs which are transmitted through the optical fibers to the base station.

### Brief Description of the Drawing

A better understanding of the invention may be obtained by reading the subsequent detailed description with reference to the drawing wherein:

FIG. 1 shows a grid of microcell opto-RF transducer radiation and reception coverage of a mobile radio cell;

FIG. 2 is a schematic diagram of an optical fiber distribution network between a mobile radio base station and opto-RF transducers with a separate fiber for each direction of optical transmission for each transducer;

FIG. 3 is a schematic diagram of an alternative opto-RF transducer for operation with a separate fiber for each direction of optical transmission;

FIG. 4 is a schematic diagram of an optical fiber distribution network between a mobile radio base station and opto-RF transducers with a separate fiber providing bidirectional optical transmission for each transducer;

FIG. 5 is a schematic diagram of an alternative opto-RF transducer for operation with a fiber providing bidirectional optical transmission;

FIG. 6 is a schematic diagram of an optical fiber distribution network between a mobile radio base station and a group of opto-RF transducers wherein a single optical detector receives all signals through a fiber from a group of the opto-RF transducers and wherein a single laser transmits through another fiber to all of the opto-RF transducers in that group; and

FIG. 7 is a schematic diagram of an optical fiber distribution network between a mobile radio base station and a group of opto-RF transducers wherein all optical signals pass through a single optical fiber.

## Detailed Description

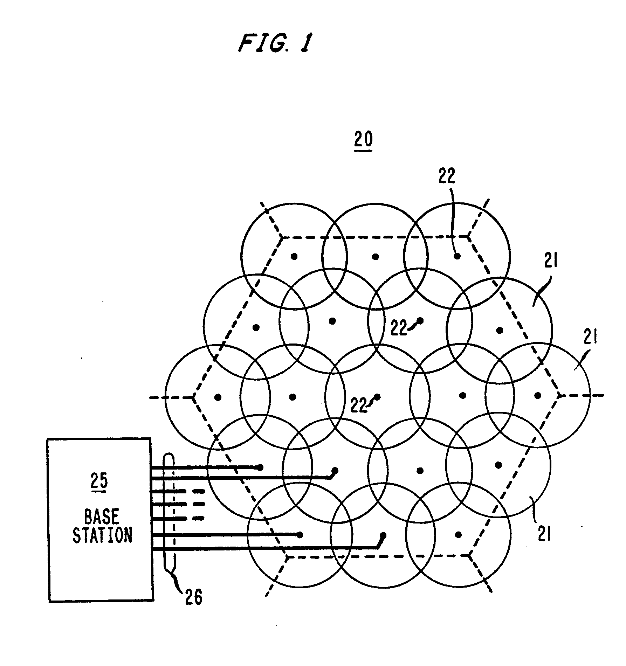

Referring now to FIG. 1, there is shown a mobile telecommunication cell 20 generally bounded by a heavy dotted line. Adjacent cells are only indicated in part. In the prior art, a base station is located within and serves that cell 20. That base station transmits to and receives from mobile units some number of frequency multiplexed information channels. A typical base station handles sixteen separate channels for reception and transmission. Multiplexed signals developed within the base station are fed via coaxial cable to an antenna located effectively at the center of the cell. That antenna radiates the multiplexed signals to mobile units within or near the cell 20.

Those mobile units receive the radiated signal and separate their assigned channels. Concurrently each of the mobile units transmits a channel to the base station antenna. All of the channels transmitted from the mobile units are multiplexed in the air and at the antenna. This multiplexed signal is transmitted from the antenna through a coaxial cable to the base station where the various channels are separated and the voice signals detected for delivery to a central office.

In our new arrangement, radiation coverage of the cell 20 is accomplished in an entirely different manner. Several microcell opto-RF transducers 22 are positioned within the cell 20 so that the entire cell area is covered in an over-lapping grid-like microcell pattern of radiation 21 of the same RF signals from the transducers 22. A base station 25 may be located within the cell 20 but more generally can be located outside of the cell. The transducers 22 are interconnected with the base-station 25 via a network of optical fibers 26.

Mobile units within the cell 20 communicate by way of two way radio signals to the transducers 22. All sixteen channels being transmitted from the base station 25 are distributed to all of the transducers. Also all sixteen channels can be received from the mobile units at any of the transducers and are transmitted via the optical fibers 26 to the base station 25. Thus the transducers act as a grid-like distributed antenna for both transmitting and receiving the frequency division multiplex signals.

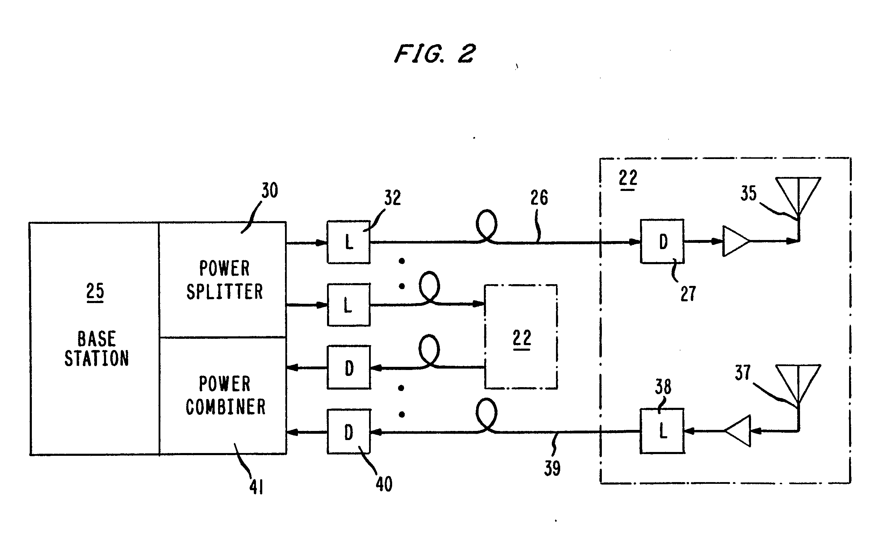

Referring now to FIG. 2, there is shown a detailed block diagram of the base station 25 which is arranged to transmit and receive frequency multiplexed FM signals in several channels. On the transmit side of the base station, the FM subcarrier channels, frequency multiplexed on a radio frequency transmission line, are applied to a star splitter, or power splitter, 30. At each of the output ports of the power splitter, the signal modulates a laser 32 for transmitting the frequency multiplexed channels on an optical carrier through an optical fiber 26. The opto-RF transducers 22 include an optical detector 27 for converting the optical signal to an electrical radio frequency signal which is amplified if required and is used for radiating from an antenna 35 to the mobile units within range. Only one opto-RF transducer is shown in detail but others are indicated by a separate block 22 and two series of dots.

In response to the radiated signals, the receiving mobile units transmit a radio frequency signal which is received by an antenna 37 of the opto-RF transducer 22. The received radio frequency signal is amplified, if required, and modulates a laser 38 that produces an optical signal which is transmitted through another optical fiber 30 to the base station 25. This optical signal includes frequency division multiplexed signals from all mobile units transmitting within the relevant microcell. At the base station, an optical detector 40 converts the optical signal to an electrical signal and applies it to an input port of a star coupler, or power combiner, 41. At the output port of the power combiner, the electrical signal, including sixteen FM channels, is fed into the base station in accordance with prior art techniques.

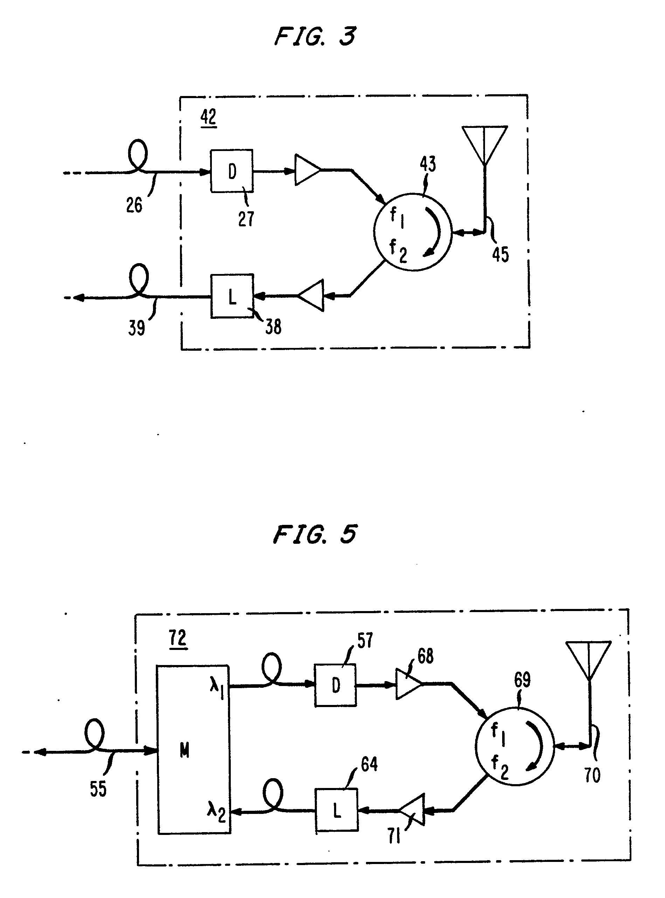

Referring now to FIG. 3, there is shown an alternative opto-RF transducer 42 which may be substituted for the opto-RF transducer 22 of FIG. 2. It is noted that the opto-RF transducer 42 also interconnects with two optical fibers 26 and 30, each of which transmits optical signals in one direction. Detector 27 and laser 38 perform the same functions as in FIG. 2. Electrical signals, in an RF band $\lambda 1$, from the detector 27, however, are applied to a port of a circulator 43 which directs them to an antenna 45 for radiating to the mobile units within the microcell.

Electrical signals, in a different RF band f2 and radiated back from the mobile units, are received by the same antenna 45 in the opto-RF transducer 42. The electrical signals are applied to the circulator 43 which directs them to the laser 38. These electrical signals, received from the antenna 45, are amplified if required. As in the arrangement of FIG. 2, the laser output signal is modulated by the frequency multiplexed FM signals in several channels.

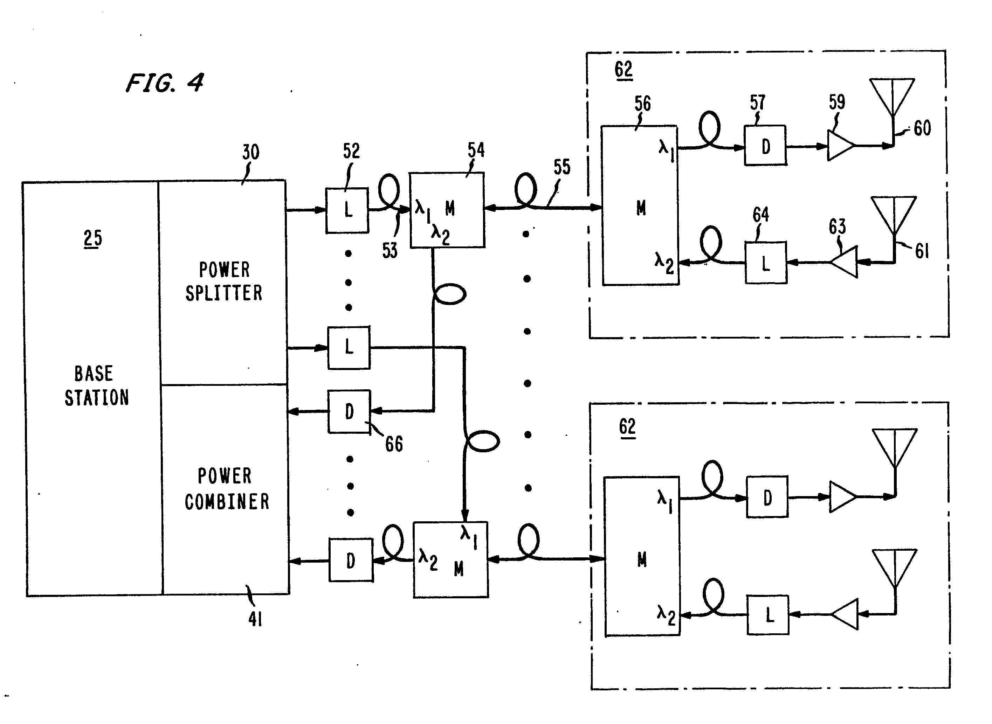

Referring now to FIG. 4, there is shown a detailed block diagram of a mobile radio base station 25 which is arranged to transmit and receive frequency multiplexed FM signals in several channels. On the transmit side of the base station 25, the FM subcarrier channels, frequency multiplexed on a radio frequency transmission line, are applied to a star splitter, or power splitter 30. At each of the output ports of the power splitter, the signal modulates a laser 52 for transmitting the frequency multiplexed channels on an optical carrier $\lambda 1$ through an optical fiber 53 to a wavelength multiplexer 54. The multiplexed optical carrier is directed by the multiplexer 54 to an optical fiber 55. An opto-RF transducer 62 includes a wavelength multiplexer 56 and an optical detector 57 for converting the optical signal on the fiber 55 to an electrical radio frequency signal which is radiated from an antenna 60 at a power, limited to approximately ten watts for the combined carriers, to mobile units within a microcell range of the antenna. The electrical signal is amplified by an amplifier 59 if required. Radiation from the antenna 60 is in a first band f1 of RF frequencies and, typically, may be at one watt for the combination of carriers.

In response to those transmitted signals, the receiving mobile units transmit a radio frequency signal which is received by an antenna 61. The received radio frequency signal is in a second band of frequencies which are separated from and do not interfere with the first band of frequencies. When received at the antenna 61, the radio frequency signal is amplified by an amplifier 63, if required, and modulates a laser 64 that produces an optical signal at a wavelength $\lambda 2$ which is transmitted through the wavelength multiplexer 56 to the optical fiber 55. This optical signal includes frequency multiplexed signals received from all mobile units transmitting within the relevant microcell. Thus, optical carrier signals of different wavelengths $\lambda 1$ and $\lambda 2$ are transmitted in opposite directions on the single fiber 55. RF carriers are multiplexed onto both optical carriers.

At the base station location, the wavelength multiplexer 54 directs the optical signal wavelength $\lambda 2$ to an optical detector 66. Such detector converts the optical signal to an electrical signal and applies it to an input port of a star coupler, or power combiner, 41. At the output port of the power combiner, the electrical signal including sixteen FM channels is fed into the base station 25 in accordance with known techniques.

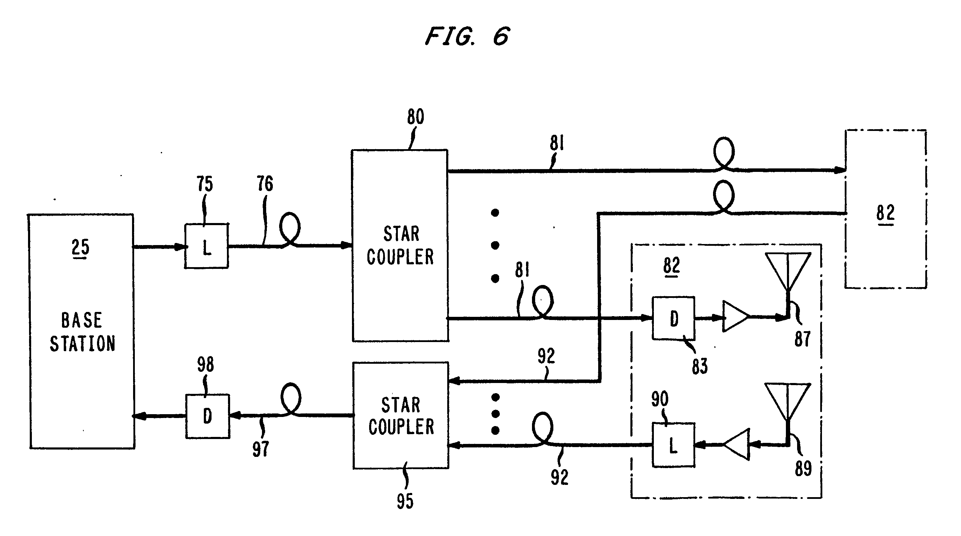

Referring now to FIG. 5, there is shown an alternative opto-RF transducer 72 which can be substituted for the transducer 62 of the arrangement of FIG. 4. It is noted that the single optical fiber 55, which transmits optical carriers in both directions, applies the wavelength $\lambda 1$ to the wavelength multiplexer 56 and receives the wavelength $\lambda 2$ from the wavelength multiplexer 56. Optical detector 57 and laser 64 operate as in the arrangement of FIG. 4. Electrical signals including the combined RF carriers detected from the optical carrier $\lambda 1$ are amplified, if required, by an amplifier 68 and are applied to a circulator 68. Those RF channels, which have a combined power limited to approximately ten watts, are directed to an antenna 70 for radiation to mobile units within a microcell range of the antenna. These RF channels are in a first RF band of frequencies f1.

RF channel signals returned from the mobile units are received at the same antenna 70 and are applied to the circulator 69. These RF channels are transmitted in a separate RF band of frequencies f2 which does not interfere with the band of frequencies that is transmitted from he antenna 70. Circulator 69 directs the received RF channels to the laser 64. The signals are amplified in an amplifier 71, if required.

Thus the opto-RF transducer 72 is arranged to interconnect with a single optical fiber carrying two different wavelength optical carriers for opposite directions of transmission and to include a single antenna arranged for radiating and receiving RF channels in different frequency bands f1 and f2. For the transmitted RF channels, their combined power typically is approximately one watt and is limited to approximately ten watts to produce the microcell coverage. RF signals, received from mobile units is at typical mobile unit power level.

Referring now to FIG. 6, there is shown the base station 25 which is arranged to transmit and receive frequency multiplexed FM signals in several channels. On the transmit side of the base station, the FM sub carrier channels, frequency multiplexed on a radio frequency transmission line, are used for modulating a laser 75 for transmitting the frequency multiplexed channels on an optical carrier through an optical fiber 76. The optical signal is applied to a star coupler 80 for distribution through optical fibers 81 to opto-RF transducers 82. The star coupler 80 can be located remote from he base station 25. In those opto-RF transducers, a detector 83 converts the optical signal to an electrical radio frequency signal which is used for radiating from each antenna 87 to mobile units located within microcell range. Transmitted radio frequency signals include several channels in a first band of frequencies. The radiated power is limited to approximately ten watts for the combined channels. Typically the combined power is approximately one watt for each microcell.

Responding mobile units transmit radio frequency signals which are received by any microcell antenna 89 that is within microcell range. Channel signals transmitted from the mobile units are multiplexed in air and at the antenna 89. They are in a different band of frequencies than the band transmitted from the antenna 87. The received radio frequency signal modulates a laser 90 producing an optical signal that is transmitted through another optical fiber 92 to a star coupler, or power combiner, 95. Optical signals from the several fibers 92 are combined and transmitted through a single optical fiber 97 to a detector 98 at the location of the base station 25. The optical signal includes frequency division multiplexed signals from all mobile units transmitting within relevant microcells. Power levels received from he mobile units are typical for mobile radio units.

At the base station location, the detector 98 converts the optical signal to an electrical signal including sixteen FM channels and applies that signal to the base station 25, in accordance with standard techniques. Opto-RF transducer 42 from FIG. 3 can be substituted for opto-RF transducer 82 for operating with a single antenna.

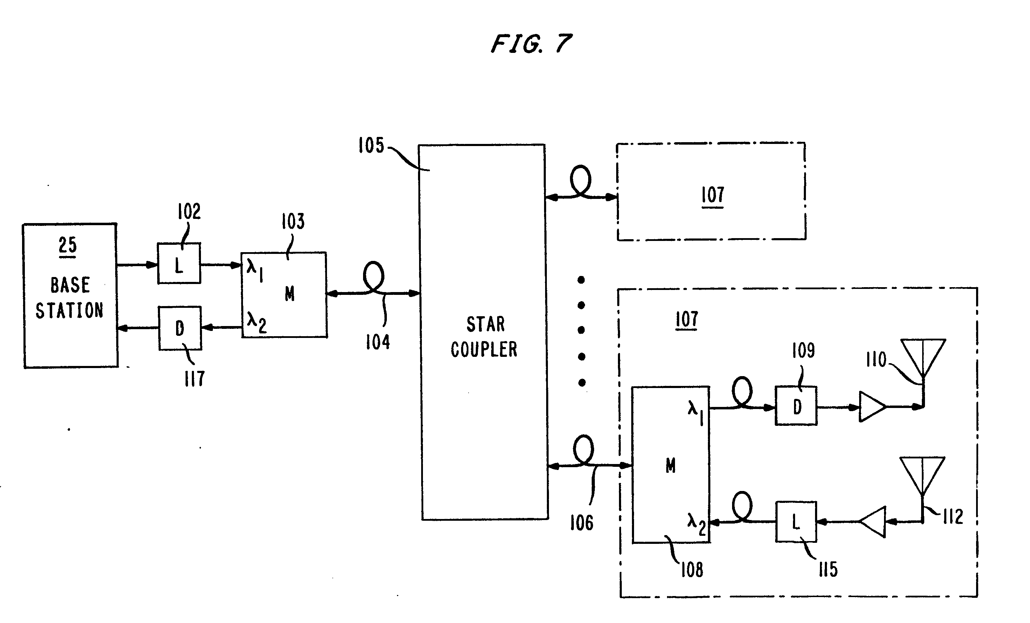

Referring now to FIG. 7, there is shown the base station 25 arranged for transmitting and receiving frequency multiplexed FM signals in many channels. To transmit, the FM subcarrier channels, frequency multiplexed on a radio frequency line, are used for modulating the output of a laser 102. The laser 102 transmits the frequency multiplexed channels on an optical carrier through a wavelength multiplexer 103 and an optical fiber 104. The optical carrier for the signal being transmitted is at a wavelength λ1. From the fiber 104, the optical signal is applied to a port of a star coupler, or power splitter 105. The star coupler 105 can be located remote from the base station 25. Each of several output ports of the power splitter 105 connects with a separate optical fiber 106 for distributing the optical signal to a group of opto-RF transducers 107. Such transducers include a wavelength multiplexer 108 for directing the optical carrier to λ1 an optical detector 109 for converting to an electrical radio frequency signal that is radiated from the group of antennas 110 to any mobile units within range of the microcell radiation coverage. Combined channel power is limited to approximately ten watts and typically is approximately one watt for covering a microcell.

Concurrently the mobile units transmit back to the base station 25 via a radio frequency signal that is received at one or more antennas 112 and is applied to modulate a laser 115 in the opto-RF transducer 107. This radio frequency signal is a combination of channels in a band of frequencies that is different from the band radiated from antenna 110. The optical carrier, modulated by the received radio frequency signal, is transmitted through the optical fibers 106 to the star coupler 105. This receiving optical carrier has a wavelength λ2 that is separate from the transmitting optical carrier so that the two optical carriers do not interfere with each other. Optical signals from all of the fibers 106 are added incoherently within the star coupler 105 and the resulting composite optical signal is transmitted through the optical fiber 104 to the wavelength multiplexer 103 where it is directed to the receiving port of the base station 25. At the base station location, the optical signal is detected in a detector 117 and is converted to a sixteen channel electrical signal that is applied to the base station 25 according to known practice.

Although the foregoing embodiments have been described as an example with sixteen channel operation, the invention also is well suited for a mobile communication network that operates with many more than sixteen channels from a base station.

Microcell radiation coverage is much more precisely defined than that of presently used base station antenna towers. As a result the number N of sub-bands can be greatly reduced with microcells because of reduced co-channel interference. This results in more frequency channels per sub-band and allows more users per square mile and greater frequency reuse. Since microcells in a given call radiate and receive the same sub-band, there is no call handoff between microcells only at the regular cell boundaries.

The fibers connecting the microcells to the base station can be reconnected at the base station to a multiple of new sub-band transceivers. This provides the ability to sub-divide a cell into multiple channel sub-cells by reconfiguring the fiber network to the opto-RF transducers. This aspect of the invention overcomes the difficulty of installing new base stations and antenna towers when sub-dividing cells.

Appended claims define the described embodiments of the invention together with other embodiments which are obvious in view thereof.

## Claims

1. A mobile radio system having a base station (25) and a plurality of mobile units, CHARACTERIZED BY
a plurality of opto-RF transducers (22),
a distribution network using optical fibers (26,39) interconnecting the base station with the opto-RF transducers, and
means (32,27,38,40) for transducing multiplexed subcarrier channels onto and off optical carriers in the fiber distribution network, for transducing multiplexed subcarrier channels onto an optical carrier on a fiber from the base station, and for transducing multiplexed subcarrier channels off an optical carrier on a fiber to the base station.

2. A system as claimed in claim 1, wherein the plurality of opto-RF transducers, in response to optical signals on the fibers, serves to radiate radio signals to mobile units and, in response to received radio signals transmitted from the mobile units, serves to modulate optical signals on at least one fiber for transmission to the base station.

3. A system as claimed in claim 2, wherein the radiated and received radio signals lie in a millimeter wave band.

4. A system as claimed in claim 2 or 3 wherein received radio signals are added together incoherently in the distribution network to provide the combined signal at the base station.

5. A system as claimed in claim 1, wherein the sub-carrier transducing means and the opto-RF transducers serve to time division multiplex channels onto the optical carrier in the fiber distribution network.

6. A system as claimed in claim 1, wherein the subcarrier transducing means and the opto-RF transducers serve to frequency multiplex channels onto the optical carrier in the fiber distribution network.

7. A mobile radio microcell transducer arrangement (22) CHARACTERIZED BY
a first antenna (35) for transmitting radio signals including multiplexed mobile radio channels in a first range of frequencies,
a second antenna (37) for receiving radio signals including multiplexed mobile radio channels in a second range of frequencies,
a laser (38), responsive to the received radio signals, for producing an optical carrier modulated by the mobile radio channels in the second range of frequencies, and
means (27) for transducing another optical carrier modulated by the mobile radio channels in the first range of frequencies into an electrical signal including the mobile radio channels having a combined power of ten watts or less.

8. A transducer as claimed in claim 7, including
a first optical fiber (39) for receiving the modulated optical carrier produced by the laser (38); and
a second optical fiber (26) for applying another modulated optical carrier to the transducing means (27).

9. A mobile radio microcell transducer arrangement (42) CHARACTERIZED BY

a laser (38),
an antenna (45) for transmitting and receiving radio signals including multiplexed mobile radio channels in different ranges of frequencies,
means (27) for converting an optical carrier modulated with mobile radio channels in a first band of frequencies into an electrical signal to be applied to the antenna, and
circulator means (43) for coupling the electrical signal in the first band of frequencies to the antenna for radiating to mobile units and for coupling an electrical signal, received in a second band of frequencies from the mobile units through the antenna, to the laser for modulating the optical output with the electrical signal in the second band of frequencies.

10. An arrangement as claimed in claim 9, including
a first optical fiber (39) for receiving the electrical signal modulated laser output; and
a second optical fiber (26) for applying the mobile radio channels modulated optical carrier to the converting means (27).

11. A mobile radio microcell transducer arrangement (62) CHARACTERIZED BY
a first antenna (60) for transmitting radio signals including multiplexed mobile radio channels in a first range of frequencies,
a second antenna (61) for receiving radio signals including multiplexed mobile radio channels in a second range of frequencies,
laser means (64), responsive to the received radio signals, for producing an optical carrier modulated by the mobile radio channels in the second range of frequencies,
means (57) for transducing another optical carrier modulated by the mobile radio channels in the first range of frequencies into an electrical signal including the mobile radio channels;
an optical fiber (55), and
means (56) for optical wavelength multiplexing a first optical wavelength ($\lambda_1$) from the optical fiber to the transducing means,
and for wavelength multiplexing a second optical wavelength ($\lambda_2$) from the laser means to the optical fiber.

12. A mobile radio microcell transducer arrangement (72) CHARACTERIZED BY a laser (64);
an antenna (70) for transmitting and receiving radio signals including multiplexed mobile radio channels in different ranges of frequencies,
means (57) for converting an optical carrier modulated with mobile radio channels in a first band of frequencies into an electrical signal to be applied to the antenna,
circulator means (69) for coupling the electrical signal in the first band of frequencies to the antenna for radiating to mobile units and for coupling an electrical signal, received in a second band of frequencies from the mobile units through the antenna, to the laser for modulating the optical output with the electrical signal in the second band frequencies,

an optical fiber (55),

and means (M) for wavelength multiplexing a first optical wavelength ($\lambda_1$) from the optical fiber to the converting means, and

for wavelength multiplexing a second optical wavelength ($\lambda_2$) from the laser means to the optical fiber.

13. An arrangement as claimed in any one of claims 9 to 12 wherein, in operation,

the electrical signal applied to the antenna has a combined channel power of ten watts or less.

# FIG. 1

EP 0 391 597 A2

# FIG. 2

# FIG. 3

# FIG. 5

*FIG. 4*

EP 0 391 597 A2

FIG. 6

FIG. 7

EP 0 391 597 A2